# EUROPEAN PATENT SPECIFICATION

(11) **EP 0 832 558 B1**
(45) Date of publication and mention of the grant of the patent: **15.02.2006**
(21) Application number: 97203841.8
(22) Date of filing: 02.08.1993
(51) Int. Cl.: A01K 1/12

(54) **A construction for milking animals**
Konstruktion zum Melken von Tieren
Construction pour la traite d'animaux

(30) Priority: 05.08.1992 NL 9201413
(43) Date of publication of application: 01.04.1998
(62) Divisional of application: 93202279.1
(73) Proprietor: MAASLAND N.V., 3147 PA Maassluis (NL)
(72) Inventor: van der Lely, Cornelis, 6300 Zug (CH)
(74) Representative: Corten, Maurice Jean F.M.

(56) References cited:
- EP-A- 0 389 013
- DE-A- 2 441 696
- US-A- 3 246 631
- US-A- 3 709 196

## Description

The present invention relates to a milk box including a milking robot for automatically milking animals, such as cows, to be accommodated in a cow shed according to the preamble of claim 1.

Milk boxes of this type are known, e.g. from EP-A1-0389013. These milk boxes have the disadvantage that they are not always sufficiently suitable for automatically milking a plurality of animals in an efficient manner. The invention has for its object to obviate these disadvantages. To that end, according to the invention, the milk box of the sort defined above comprises the features of the characterizing part of claim 1.

According to the invention, the milk box can in addition be provided with a changing entrance and exit, or with an entrance and exit which have a changing location. The entrance and the exit of the milk box are preferably arranged such that the animals can pass through the milk box in one manner only.

In a first concrete embodiment, the milk box is pivotal about an upwardly directed shaft. A practical implementation is then obtained when the milk box is disposed on a platform which is pivotal about an upwardly directed shaft. An automatically controllable control member can then be present, with the aid of which the milk box is pivotal through an adjustable angle about the upwardly directed shaft. This construction renders it possible for the milk box to be pivoted each time to such a position that always one sub-area of the cow shed is in connection with the entrance of the milk box, and an other sub-area of the cow shed is in connection with the exit of the milk box, so that, irrespective of the fact in which sub-area they are located, the animals can always pass to a different sub-area via the milk box. Although the entrance and the exit of the milk box can be constituted by only one single opening, provided in, for example, the longitudinal side wall of the milk box, it is advantageous when the entrance and the exit of the milk box are formed by two openings made in a side-by-side relationship in a longitudinal side wall of the milk box. It is of course alternatively possible to provide the entrance and the exit at the two short sides of the milk box or in different longitudinal sides thereof. In the latter case, the entrance is in the rearmost portion of one longitudinal side wall and the exit in the leading portion of the other longitudinal side wall. The entrance and the exit of the milk box can be closed by automatically controllable doors.

Furthermore it is particularly advantageous for the milk box to be surrounded by a circular screen, which of course leaves the openings for the entrance and the exit clear, as otherwise the animals could pass quite near along the milk box from one sub-area into an other. An advantageous construction of the screen is furthermore obtained when the entrance and the exit of the milk box are closable by outwardly pivoting doors provided with an arc-shaped screening element which, when the entrance and/or exit are closed by the doors, is contiguous in the shape of a circle to at least a portion of the arc-shaped screen and which, when the entrance and/or exit are released, moves approximately along the lower or upper side of a portion of the arc-shaped screen.

For a better understanding of the invention and to show how the same may be carried into effect, reference will now be made, by way of example, to the embodiment shown in the accompanying drawings, in which:
Figures 1 and 2 each show a pasture area, divided into four pasture sections, in the centre of which there is a loose house;
Figure 3 shows a loose house containing a pivotal milk box, which is positioned in the pasture area which is divided into four pasture sections:

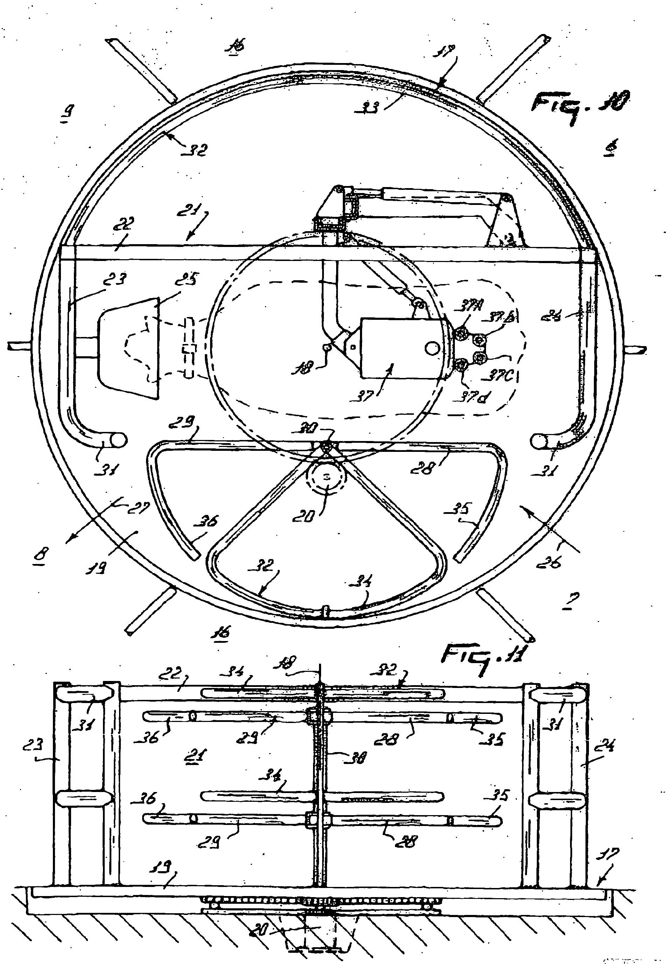

Figures 4 to 9 show the loose house illustrated in Figure 3, in which the milk box is each time pivoted to a different position;
Figure 10 is a plan view of a pivotal milk box;
Figure 11 is a side view of the milk box shown in Figure 10, and

the diagrams A to I of Figure 12 show the mode of pivoting of the milk box.

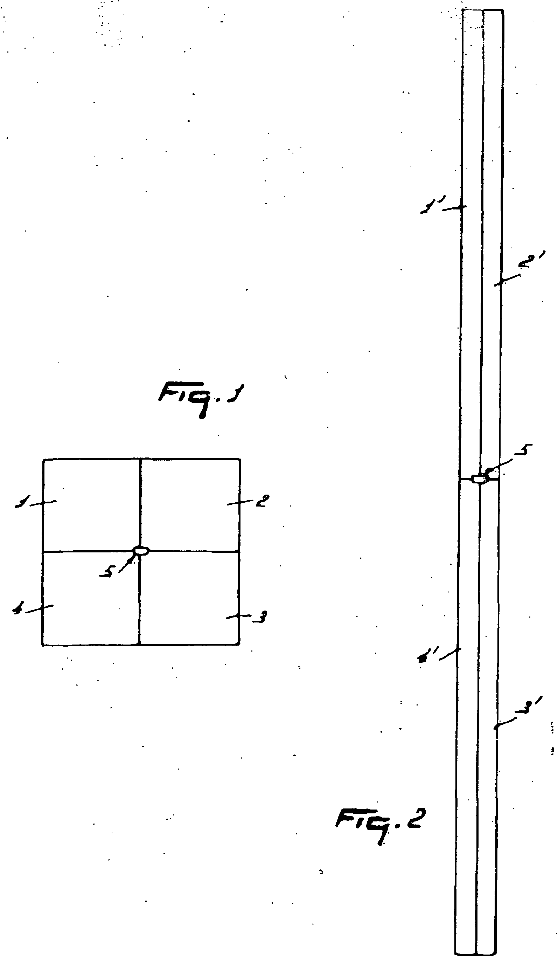

Figure 1 shows a pasture area measuring, for example, 500 x 500 meters, which is divided into four pasture sections 1. 2, 3 and 4, in the centre of which there is arranged a loose house 5. By placing the loose house in the centre of the pasture area, it is achieved that the animals present in the pasture sections can always reach the loose house with milk box within the shortest possible period of time.

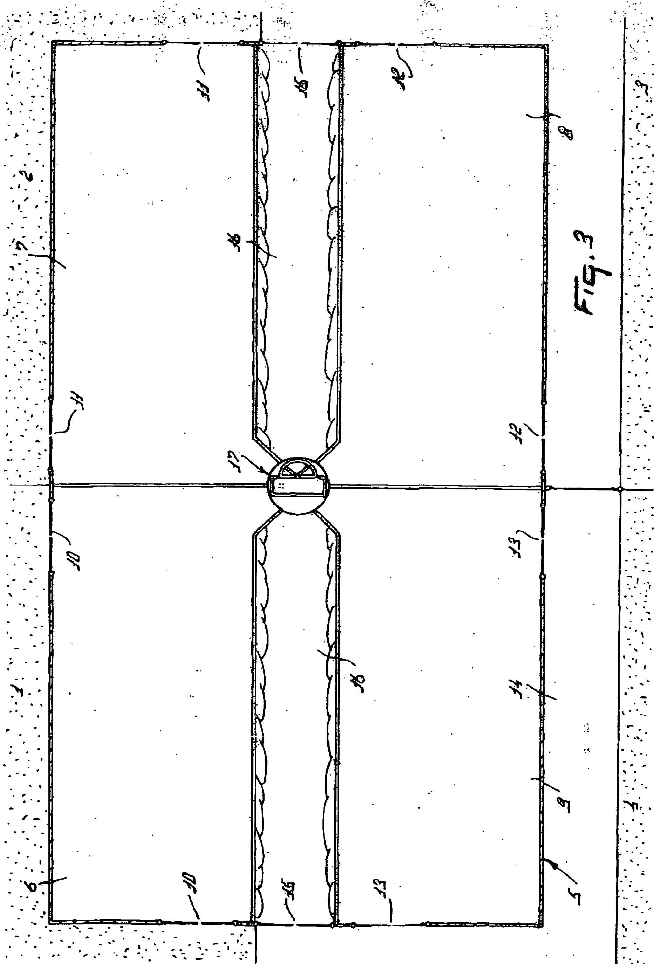

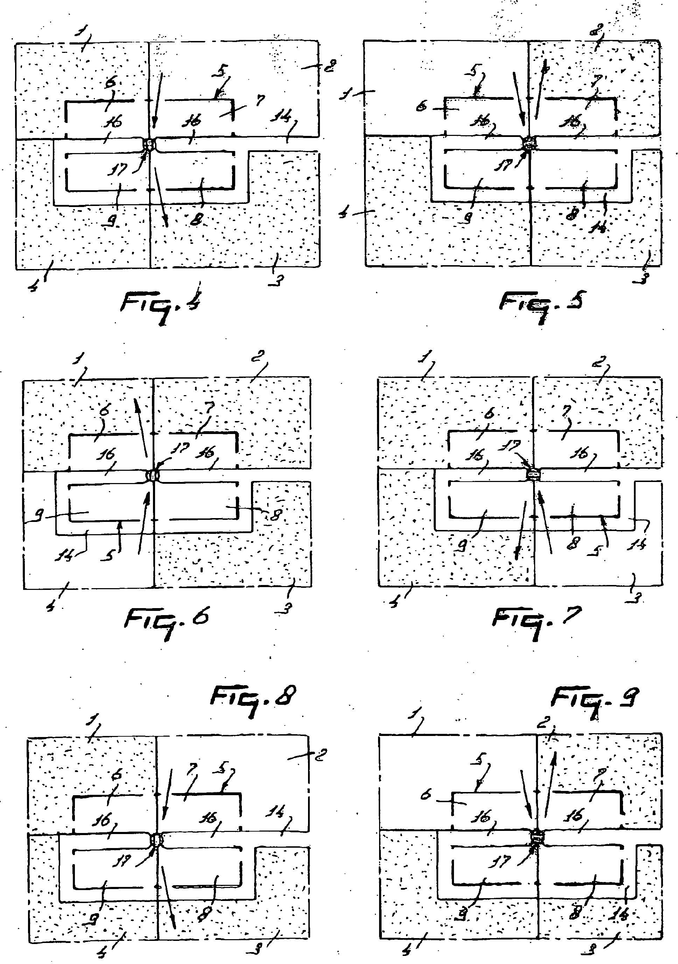

Figure 2 shows a more extensive pasture area, also divided into four pasture sections 1', 2', 3' and 4', there also being present again a loose house 5 with a milk box in the centre of the area. Even if this pasture area would have a length of 2500 meters, then the animal most remote from the loose house can still reach the loose house in a limited number of minutes, e.g. 15 minutes. In the summer months in particular, it will be advantageous when the animals in the separate pasture sections can reach the loose house from a relevant pasture section, whereas in the winter months, when the cows are in the cow shed, the connection between the pasture sections and the loose house can be closed. As is shown in Figure 3, the loose house 5 is in this embodiment also divided into four sub-areas 6, 7, 8 and 9. Each of these sub-areas is in connection via doors with a relevant pasture section. The sub-area 6 is in connection with the pasture section 1 via the doors 10, the sub-area 7 with the pasture section 2 via the doors 11, the sub-area 8 with the pasture section 3 via the doors 12 and the sub-area 9 with the pasture section 4 via the doors 13. During the summer months, the doors 10 to 13 will be open, whereas during the winter months, when the animals are in the sub-areas 6, 7, 8 or 9, the doors 10 to 13 will be closed. Furthermore, Figure 3 shows that a portion of the loose house 5 is enclosed by a path 14. Over this path 14 and via doors 15 access can be obtained, possibly by a tractor or silage wagon, to two feeding passages 16 in the loose house 5, which feeding passages run transversely through the loose house to as far as a milk box positioned in the midway point of the loose house. At both sides, the feeding passages 16 are provided with feeding troughs or feed channels, in which roughage can be deposited for the animals present in the loose house.

When, as in the present embodiment, the pasture area and the loose house are divided into four pasture sections or four sub-areas, respectively, then the animals are divided into three groups. If the capacity of the milk box is adjusted to e.g. fifty animals, each group will include approximately seventeen animals. Each group of animals can be guided from the pasture section or from the sub-area of the loose house in which they are present, via the milk box 17 to an other loose house sub-area and from there to a different pasture section. In Figure 4, a first group of animals is located in the pasture section 2 or in the sub-area 7, a second group of animals in the pasture section 1 or in the sub-area 6, and a third group of animals in the pasture section 4 or in the sub-area 9. No animals are then present in the pasture section 3 and in the sub-area 8. The milk box 17, which is set-up such that it is pivotal, connects the sub-areas 7 and 8 in Figure 4. In this embodiment, if milking of the animals starts at 04.00 a.m., the animals can have been milked automatically in a milking period from 04.00 to 06.15 a.m. and they are present in the pasture section 2 or in the sub-area 7. In this milking period, a group of e.g. seventeen animals car enter consecutively from the sub-area 7 the milk box 1.7 where they are milked automatically, whereafter they can proceed from the milk box 17 to the sub-area 8 and possibly to the pasture section 3. In this milking period, lasting from 04.00 to 06.15 a.m., the animals in the pasture section 1 and in the sub-area 6, as do also the animals in the pasture section 4 and in the sub-area 9, remain quietly in the area then available to them. At 06.15 a.m. the animals present in the pasture section 2 or in the sub-area 7 can have been milked and have gone via the milk box to the sub-area 8 or possibly to the pasture section 3. The milk box 17 is then pivoted in such a manner that it now forms a connection between the sub-areas 6 and 7. In the milking period from 06.15 to 08.30 a.m., the animals in the pasture section 1 or in the sub-area 6 are milked. These animals can proceed via the milk box 17 to the sub-area 7 and optionally to the pasture section 2. The groups of animals present in the pasture section 3 or in the sub-area 8, or in the pasture section 4 and in the sub-area 9, remain quietly in the area available to them. At 08.30 a.m. the animals have proceeded from the pasture section 1 and the sub-area 6 via the milk box 17 to the sub-area 7 and optionally to the pasture section 2, and the milk box 17 can be pivoted to the position shown in Figure 6, in which position it forms a connection between the sub-areas 9 and 6. In the milking period from 08.30 to 10.45 a.m., the animals in the pasture section 4 or in the sub-area 9 are milked and go via the milk box to the sub-area 6 or the pasture section 1. In the manner described above, all three groups of cows will have been milked for the first time in the milking period from 04.00 to 10.45 a.m.. After, for example, a rest interval of 35 minutes, the second milking cycle can start. The milk box 17 is pivoted to such a position that it forms a connection between the sub-areas 8 and 9. In the milking period from 11.20 a.m. to 01.35 p.m., the animals also milked first in the first milking cycle can again enter the milk box 17 consecutively in order to be milked there, and they can proceed from there to the sub-area 9 and optionally to the pasture section 4. At 01.35 p.m. the milk box is then pivoted to a position in which it again forms a connection between the sub-areas 7 and 8, so that the animals in the pasture section 2 or in the sub-area 7 can be milked and can go to the sub-area 8 and optionally to the pasture section 3. At 03.50 p.m. the milk box 17 is pivoted to such a position that it forms a connection between the sub-areas 6 and 7, so that the animals in the pasture section 1 or in the sub-area 6 can be milked and can walk to the sub-area 7 and optionally to the pasture section 2. After this second milking cycle from 11.20 a.m. to 06.05 p.m., a third milking cycle can start for all three groups of animals, after a rest interval of e.g. 35 minutes. After this third milking cycle has ended, a rest interval is taken from 01.25 to 04.00 a.m., whereafter the above-described cycle can start again. By dividing the group of approximately fifty animals into three groups of approximately seventeen animals, regular milking periods are obtained. It is advantageous for the animals' health and comfort when always at least two groups of animals can graze, rest or ruminate during the period of time in which another group of animals is milked. In this connection, also the rest intervals between the milking cycles are advantageous. It will, however, be obvious that the invention is not limited to the number of animals, the number of groups and the number of anirrials per group, chosen here by way of example, which also applies to the schedule of the milking periods and the rest intervals as described in the foregoing. All kinds of modifications thereof are of course possible.

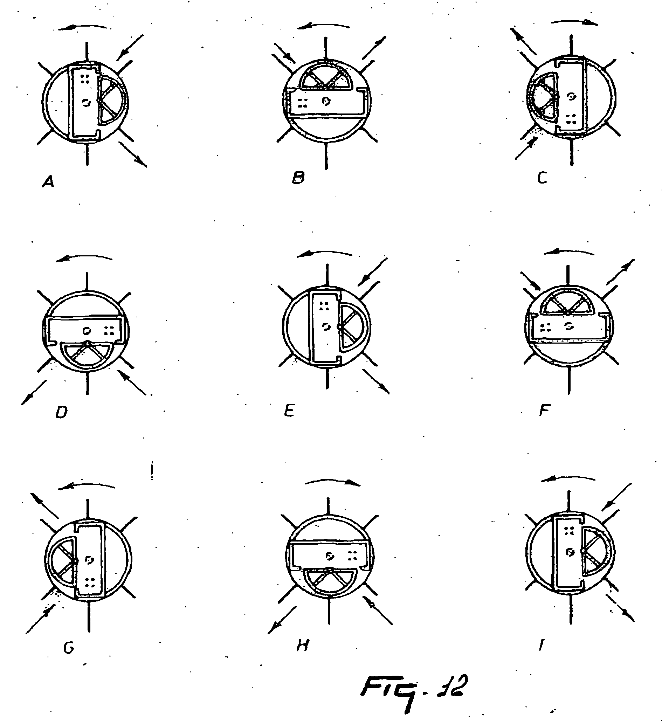

The milk box 17 is shown in greater detail in Figures 10 and 11. The milk box is pivotal about an upwardly directed shaft 18 and is mounted on a platform 19 which is pivotal about said shaft. The milk box is shown in Figure 10 in such a manner so as to form a connection between the sub-areas 7 and 8.

The milk box can be pivoted with the aid of a control member 20, for example a stepping motor, through an adjustable angle about the upwardly directed shaft 18. By means of a computer, preferably the one which is used for the automatic milking of the animals, or with the aid of an electro-mechanical circuit, a control signal can be applied at predetermined instants to the control member 20, which in response thereto pivots the milk box 17, more specifically through an angle which is preset either in the computer or preset in the electro-mechanical circuit. A frame 21 is disposed on the platform 19. This frame is a dividing wall of the milk box, in which the animal takes place during milking. The frame 21 includes a frame portion 22 which constitutes a longitudinal side of the milk box and two frame portions 23 and 24 which form the short sides thereof. A feed trough 15 is attached to the frame portion 23, which feed trough is in connection with an automatic feeding system. The milk box 17 has an entrance 26 and an exit 27, which entrance and exit can be dosed by respective doors 28 and 29. The doors 28 and 29 are pivotal about an upwardly directed shaft 30 and can be pivoted about the shaft 30 with the aid of a computer-controlled motor in order to open or close the entrance and/or the exit 26, and 27, respectively. When the doors 28 and 29 dose the entrance 26 and the exit 27, respectively, then the doors 28 and 29 form a closed longitudinal side of the milking parlour and are then contiguous to the curved portion 31 of the short sides of the frame portion 23 and 24 which form the milking parlour.

To prevent the possibility of the animals getting caught between the doors 28 and 29 or from possibly proceeding from the sub-area 6 into the sub-area 9 by passing along the milk box, or, for example, from the sub-area 7 to the sub-area 8 along the other side of the milk box, the latter is provided with an arc-shaped screen 32 which pivots together with the milk box 17 and only releases the entrance and exit 26, 27. The arc-shaped screen 32 has a first portion 33, provided at and behind that frame portion 22 that constitutes a longitudinal side of the milking parlour, and a portion 34 which constitutes a partial screen for the other longitudinal side of the milking parlour. The outwardly pivotal doors 28 and 29 are each provided with an arc-shaped screening element 35 and 36, respectively, which arc-shaped screening elements are contiguous in the form of a circle to the portion 34 of the arc-shaped screen 32 and which, when the entrance and/or exit of the milking parlour is released, moves approximately along the bottom side or along the upper side of the portion 34 of the arc-shaped screen 32.

The milking parlour is furthermore provided with a milking robot 37 with automatically connectable teat cups 37a, 37b. 37c and 37d. This robot 37 is arranged behind the longitudinal side constituted by the frame portion 22. When an animal has arrived in the milk box, the arm of the robot 37 can be swivelled to under the animal, so that the teat cups disposed at the end of the robot arm can be connected to the teats of the animal and the milking operation can start. Controlling the milking robot 37 and applying the teat cups to the teats of the animal, as well as the subsequent milking procedure, can be realized fully automatically under control of a computer. The computer used for this purpose can also be used for driving the motor 20 by means of which the entire milk box 17 can be pivoted, as well as for driving the motor with the aid of which the doors 28 and 29 can be operated independently of each other.

The diagrams A to 1 of Figure 12 indicate, by way of example, how, when the loose house is divided into four sub-areas, the milk box 17 can be pivoted during a 24 hour's cycle. Starting from the milk box position shown in diagram A, the milk box is pivoted twice through 90°, during the first milking run, in the anti-clockwise direction and the position shown in diagram C is reached. From the latter position at the start of the second milking run, the milk box is pivoted through 270° in the clockwise direction and thereafter twice through 90° in the anti-clockwise direction until the position shown in diagram F is reached, in which position the last group of animals is milked during the second milking run. After the second milking run, the milk box is again pivoted through 90° in the clockwise direction and the position shown in diagram G is reached, in which the first group of animals is milked in the third milking run. Thereafter the milk box is pivoted through 90° anti-clockwise and through 270° in the clockwise direction until the milk box has reached the position shown in diagram I, in which last position the last group of animals is subjected to the third milking run. The milk box then is in a position equal to that shown in diagram A, at which point the subsequent 24 hour's cycle of three milking runs can start. This manner of pivoting the milk box has for its aim to prevent it from making a full rotary motion through 360° or more, which might cause problems as regards the connection of tubes and cables thereto.

## Claims

1. A milk box (17) including a milking robot (37) for automatically milking animals, such as cows, to be accommodated in a cow shed, such that, when the cow shed is divided into a number of, for example four, sub-areas (6 to 9), always two of these sub-areas (6, 7; 7, 8; 8, 9; 9, 6) can be connected with each other via the milk box (17), so that animals which belong to one group and are still to be milked can enter the milk box (17) from a sub-area consecutively and can leave the milk box (17) after having been milked and be guided to a different sub-area, **characterized in that** it includes an arc-shaped screen (32) which pivots together with the milk box (17).

2. A milk box (17) as claimed in claim 1, **characterized in that** the entrance (26) and exit (27) of the milk box (17) are closable by outwardly pivotal doors (28, 29) which are provided with an arc-shaped screening element (35, 36) which, when the entrance (26) and/or exit (27) are closed by the doors (28, 29), is contiguous in a circular shape to at least a portion of the arc-shaped screen (32) and which, when the entrance (26) and/or exit (27) are released, moves approximately along the lower or upper side of a portion of the arc-shaped screen (32).

3. A milk box (17) as claimed in claim 1 or 2, **characterized in that** it is provided with a changing entrance and exit, or with an entrance and exit which have a changing location.

4. A milk box (17) as claimed in claim 1, 2 or 3, **characterized in that** the animals can pass in only one manner through this milk box (17).

5. A milk box (17) as Gaimed in any one of claims 1 to 4, **characterized in that** it is pivotal about an upwardly directed shaft (18).

6. A milk box (17) as claimed in claim 5, **characterized in that** it is disposed on a platform (19) which is pivotal about an upwardly directed shaft (18).

7. A milk box (17) as claimed in claim 5 or 6, **characterized in that** an automatically controllable control member (20) is present, with the aid of which the milk box (17) is pivotal through an adjustable angle about the upwardly directed shaft (18).

8. A milk box (17) as claimed in claim 7, **characterized in that** the control member (20) includes a stepping motor.

9. A milk box (17) as claimed in any one of the preceding claims, **characterized in that** the entrance (26) and the exit (27) of the milk box (17) are formed by two openings which are provided in a side-by-side relationship in a longitudinal side wall of the milk box (17).

10. A milk box (17) as claimed in claim 9, **characterized in that** the entrance (26) and the exit (27) of the milk box (17) are closed by automatically controllable doors (28, 29).

11. A construction for milking animals, such as cows, comprising a cow shed in which a milk box (17) as claimed in any one of the preceding claims is accommodated, **characterized in that** the cow shed is divided into sub-areas (6 to 9) and the cow shed includes a system of corridors with passageways arranged near the milk box (17), in which computer-controlled doors (38 to 50) are disposed which can be controlled in such a manner that an animal can proceed from a predetermined sub-area to a different sub-area via the milk box (17).

## Patentansprüche

1. Melkbox (17) mit einem Melkroboter (37) zum automatischen Melken von Tieren, wie z. B. Kühen, die in einem Kuhstall anzuordnen ist, so daß bei Unterteilung des Kuhstalles in eine Anzahl von beispielsweise vier Unterbereichen (6 bis 9) stets zwei dieser Unterbereiche (6, 7; 7, 8; 8, 9; 9, 6) über die Melkbox (17) miteinander verbunden werden können, so daß Tiere, die zu einer Gruppe gehören und noch zu melken sind, die Melkbox (17) nacheinander von einem Unterbereich aus betreten und die Melkbox (17) nach dem Melken verlassen und in einen anderen Unterbereich geleitet werden können, **dadurch gekennzeichnet, daß** die Melkbox eine bogenförmige Abschirmung (32) aufweist, die sich gemeinsam mit der Melkbox (17) dreht.

2. Melkbox (17) nach Anspruch 1,
**dadurch gekennzeichnet, daß** der Eingang (26) und der Ausgang (27) der Melkbox (17) durch nach außen schwenkbare Türen (28, 29) verschließbar sind, die ein bogenförmiges Abschirmelement (35, 36) aufweisen, welches zumindest an einem Teil der bogenförmigen Abschirmung (32) kreisförmig anliegt, wenn der Eingang (26) und/oder der Ausgang (27) durch die Türen (28, 29) verschlossen sind, und welches sich etwa längs der Unterseite oder der Oberseite eines Teiles der bogenförmigen Abschirmung (32) bewegt, wenn der Eingang (26) und/oder der Ausgang (27) freigegeben sind.

3. Melkbox (17) nach Anspruch 1 oder 2,
**dadurch gekennzeichnet, daß** sie einen wechselnden Eingang und Ausgang oder einen Eingang und Ausgang mit wechselnder Lage hat.

4. Melkbox (17) nach Anspruch 1, 2 oder 3,
**dadurch gekennzeichnet, daß** diese Melkbox (17) von den Tieren nur in einer Richtung zu durchlaufen ist.

5. Melkbox (17) nach einem der Ansprüche 1 bis 4, **dadurch gekennzeichnet, daß** sie um eine aufwärts gerichtete Achse (18) drehbar ist.

6. Melkbox (17) nach Anspruch 5,
**dadurch gekennzeichnet, daß** sie auf einer Plattform (19) angeordnet ist, die um eine aufwärts gerichtete Achse (18) drehbar ist.

7. Melkbox (17) nach Anspruch 5 oder 6,
**dadurch gekennzeichnet, daß** eine automatisch betätigbare Steuerung (20) vorhanden ist, mittels der die Melkbox (17) über einen einstellbaren Winkel um die aufwärts gerichtete Achse (18) zu drehen ist.

8. Melkbox (17) nach Anspruch 7,
**dadurch gekennzeichnet, daß** die Steuerung (20) einen Schrittmotor aufweist.

9. Melkbox (17) nach einem der vorhergehenden Ansprüche,
**dadurch gekennzeichnet, daß** der Eingang (26) und der Ausgang (27) der Melkbox (17) durch zwei Öffnungen gebildet sind, die nebeneinander in einer Längsseitenwand der Melkbox (17) ausgebildet sind.

10. Melkbox (17) nach Anspruch 9,
**dadurch gekennzeichnet, daß** der Eingang (26) und der Ausgang (27) der Melkbox (17) durch automatisch zu steuernde Türen (28, 29) verschlossen sind.

11. Vorrichtung zum Melken von Tieren, wie z. B. Kühen, mit einem Kuhstall, in dem eine Melkbox (17) nach einem der vorhergehenden Ansprüche angeordnet ist,
**dadurch gekennzeichnet, daß** der Kuhstall in Unterbereiche (6 bis 9) unterteilt ist und der Kuhstall ein nahe der Melkbox (17) angeordnetes System von Gängen mit Durchtrittsöffnungen aufweist, in denen rechnergesteuerte Türen (38 bis 50) angeordnet sind, die derart zu steuern sind, daß ein Tier von einem vorgegebenen Unterbereich über die Melkbox (17) in einen anderen Unterbereich wechseln kann.

## Revendications

1. Box de traite (17) comportant un robot de traite (37) destiné à traire automatiquement des animaux, tels que des vaches, devant être logées dans une étable, de telle sorte que, lorsque l'étable est divisée en un certain nombre de, par exemple quatre, sous-zones (6 à 9), deux de ces sous-zones (6, 7 ; 7, 8 ; 8, 9 ; 9, 6) peuvent toujours être connectées l'une à l'autre via le box de traite (17), de sorte que les animaux qui appartiennent à un groupe et sont toujours en attente de la traite peuvent pénétrer de façon consécutive dans le box de traite (17) depuis une sous-zone et peuvent quitter le box de traite (17) après avoir été traits et être guidés vers une sous-zone différente, **caractérisé en ce qu'**il comporte un dispositif de triage (32) en forme d'arc qui pivote conjointement avec le box de traite (17).

2. Box de traite (17) selon la revendication 1, **caractérisé en ce que** l'entrée (26) et la sortie (27) du box de traite (17) peuvent être fermées par des portes (26, 29) pivotant vers l'extérieur qui sont pourvues d'un élément de triage en forme d'arc (35, 36) qui, lorsque l'entrée (26) et/ou la sortie (27) sont fermées par les portes (28, 29), est contigu selon une forme circulaire à au moins une partie du dispositif de triage en forme d'arc (32) et qui, lorsque l'entrée (26) et/ou la sortie (27) sont libérées, se déplace approximativement le long du côté inférieur ou supérieur d'une partie du dispositif de triage en forme d'arc (32).

3. Box de traite (17) selon la revendication 1 ou 2, **caractérisé en ce qu'**il est pourvu d'une entrée et d'une sortie variables ou d'une entrée et d'une sortie qui présentent un emplacement variable.

4. Box de traite (17) selon la revendication 1, 2 ou 3, **caractérisé en ce que** les animaux ne peuvent passer que d'une seule manière à travers ce box de traite (17).

5. Box de traite (17) selon l'une quelconque des revendications 1 à 4, **caractérisé en ce qu'**il pivote autour d'un arbre (18) dirigé vers le haut.

6. Box de traite (17) selon la revendication 5, **caractérisé en ce qu'**il est disposé sur une plate-forme (19) qui pivote autour d'un arbre (18) dirigé vers le haut.

7. Box de traite (17) selon la revendication 5 ou 6, **caractérisé en ce qu'**un élément de commande (20) pouvant être commandé automatiquement est présent, à l'aide duquel le box de traite (17) peut pivoter selon un angle réglable autour de l'arbre (18) dirigé vers le haut.

8. Box de traite (17) selon la revendication 7, **caractérisé en ce que** l'élément de commande (20) comporte un moteur pas à pas.

9. Box de traite (17) selon l'une quelconque des revendications précédentes, **caractérisé en ce que** l'entrée (26) et la sortie (27) du box de traite (17) sont formées par deux ouvertures qui sont prévues dans une relation côte à côte dans une paroi latérale longitudinale du box de traite (17).

10. Box de traite (17) selon la revendication 9, **caractérisé en ce que** l'entrée (26) et la sortie (27) du box de traite (17) sont fermées par des portes (28, 29) pouvant être commandées automatiquement.

11. Construction pour animaux de traite, tels que des vaches, comprenant une étable dans laquelle est logé un box de traite (17) selon l'une quelconque des revendications précédentes, **caractérisée en ce que** l'étable est divisée en sous-zones (6 à 9) et l'étable comporte un système de couloirs dotés de passages agencés à proximité du box de traite (17), dans lesquels sont disposées des portes commandées par ordinateur (38 à 50), qui peuvent être commandées d'une manière telle qu'un animal peut avancer d'une sous-zone prédéterminée à une sous-zone différente via le box de traite (17).
